(19) Europäisches Patentamt

European Patent Office

Office européen des brevets

(11) **EP 1 028 043 B1**

(12) **EUROPÄISCHE PATENTSCHRIFT**

(45) Veröffentlichungstag und Bekanntmachung des Hinweises auf die Patenterteilung:
**09.03.2005 Patentblatt 2005/10**

(51) Int Cl.[7]: **B60T 8/32**, B60T 13/66

(21) Anmeldenummer: **99124169.6**

(22) Anmeldetag: **03.12.1999**

(54) **Druckregeleinrichtung**

Pressure control device

Dispositif de commande de pression hydraulique

(84) Benannte Vertragsstaaten:
**DE FR SE**

(30) Priorität: **11.02.1999 DE 19905684**

(43) Veröffentlichungstag der Anmeldung:
**16.08.2000 Patentblatt 2000/33**

(73) Patentinhaber: **WABCO GmbH & CO. OHG**
**30453 Hannover (DE)**

(72) Erfinder:
• **Schappler, Hartmut**
**30455 Hannover (DE)**
• **Sieker, Armin**
**33613 Bielefeld (DE)**
• **Kutzner, Henning**
**31008 Elze (DE)**

(74) Vertreter: **Schrödter, Manfred**
**WABCO GmbH & Co. OHG,**
**Postfach 91 12 62**
**30432 Hannover (DE)**

(56) Entgegenhaltungen:
EP-A- 0 075 657  EP-A- 0 224 832
EP-A- 0 353 003  EP-A- 0 413 172
EP-A- 0 669 565  EP-A- 0 697 317
WO-A-92/13740  WO-A-97/23372
DE-A- 3 240 277  DE-A- 3 636 140
DE-A- 4 029 793  DE-A- 19 654 427
US-A- 4 253 480

• PATENT ABSTRACTS OF JAPAN vol. 1995, no. 05, 30. Juni 1995 (1995-06-30) -& JP 07 036551 A (SMC CORP), 7. Februar 1995 (1995-02-07)

EP 1 028 043 B1

**Beschreibung**

Die Erfindung betrifft eine Druckregeleinrichtung, insbesondere eine elektrisch betätigbare Bremseinrichtung für ein Fahrzeug, gemäß dem Oberbegriff des Patentanspruchs 1.

Eine als elektrisch betätigbare Bremseinrichtung ausgebildete Druckregeleinrichtung ist aus der EP 0 547 407 B1, dort insbesondere Fig. 1, bekannt.

Bei der bekannten Druckregeleinrichtung ist für eine Steuerung des Drucks in einem Bremszylinder eine Ventileinrichtung vorgesehen, die ein von einem Einlaßventil und einem Auslaßventil vorgesteuertes Relaisventil aufweist. Das Auslaßventil ist dabei als stromlos geschlossenes 2/2-Wegeventil und das Einlaßventil als stromlos geöffnetes 2/2-Wegeventil ausgebildet. Damit im Falle eines Stromausfalls weiterhin eine Bremsbetätigung möglich ist und um außerdem eine plötzliche und unerwünschte Druckluftbefüllung der Bremszylinder und damit eine Zwangsbremsung des Fahrzeuges zu vermeiden, ist dem Einlaßventil ein Umschaltventil vorgeschaltet, welches im Normalfall, d. h. bei funktionierender Stromversorgung, das Einlaßventil mit einem Druckluftvorratsbehälter verbindet und bei Stromausfall das Einlaßventil mit einem pneumatischen Bremsventil verbindet. Zusätzlich ist ein Rückschlagventil vorgesehen, welches bei Stromausfall das Einlaßventil zur Entlüftung des Bremszylinders bzw. des Relaisventils überbrückt.

Die bekannte Druckregeleinrichtung ist relativ aufwendig. So werden neben den für die eigentliche Druckregelfunktion erforderlichen Einlaß- und Auslaßventilen noch zwei weitere Ventile, nämlich das Umschaltventil und das Rückschlagventil, benötigt.

Aus der EP 0 669 565 A2 ist eine Druckregeleinrichtung mit einem digitalen Abtastregler bekannt, die zum Einstellen von Bremsdrücken in einem Fahrzeug verwendbar ist. Der Abtastregler dient zur elektrischen Ansteuerung einer Magnetventil-Anordnung, mit welcher ein Bremszylinder aus einem Vorrat belüftbar oder mit über einen Auslass entlüftbar ist. Die Magnetventil-Anordnung besteht aus einem Einlassventil und einem Auslassventil, die direkt an den Bremszylinder angeschlossen sind.

Aus der EP 0 353 003 A2 ist ein elektropneumatischer Drucksteuerapparat bekannt, welcher ein Relaisventil enthält, welches über ein elektromagnetisch betätigbares Einfassventil sowie ein elektromagnetisch betätigbares Auslassventil mit Druckluft beaufschlagbar ist.

Der Erfindung liegt daher die Aufgabe zu Grunde, eine Druckregeleinrichtung, bei der ein Relaisventil zum Einsatz kommt, anzugeben, welches eine für Bremsenbetätigungen ausreichende Regelgüte aufweist.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung wird im folgenden unter Nennung von Vorteilen anhand eines in den Zeichnungen dargestellten Ausführungsbeispiels näher erläutert.

Es zeigen

Fig. 1      eine als elektrisch betätigbare pneumatische Bremsanlage ausgebildete Druckregeleinrichtung in schematischer Darstellung und

Fig. 2      ein Blockschaltbild eines in der Bremsanlage gemäß Fig. 1 verwendeten digitalen Abtastreglers und

Fig. 3,      4 und 5 Teile des digitalen Abtastreglers gemäß Fig. 2 als Flußdiagramme.

In den Figuren werden gleiche Bezugszeichen für einander entsprechende Teile und Signale verwendet.

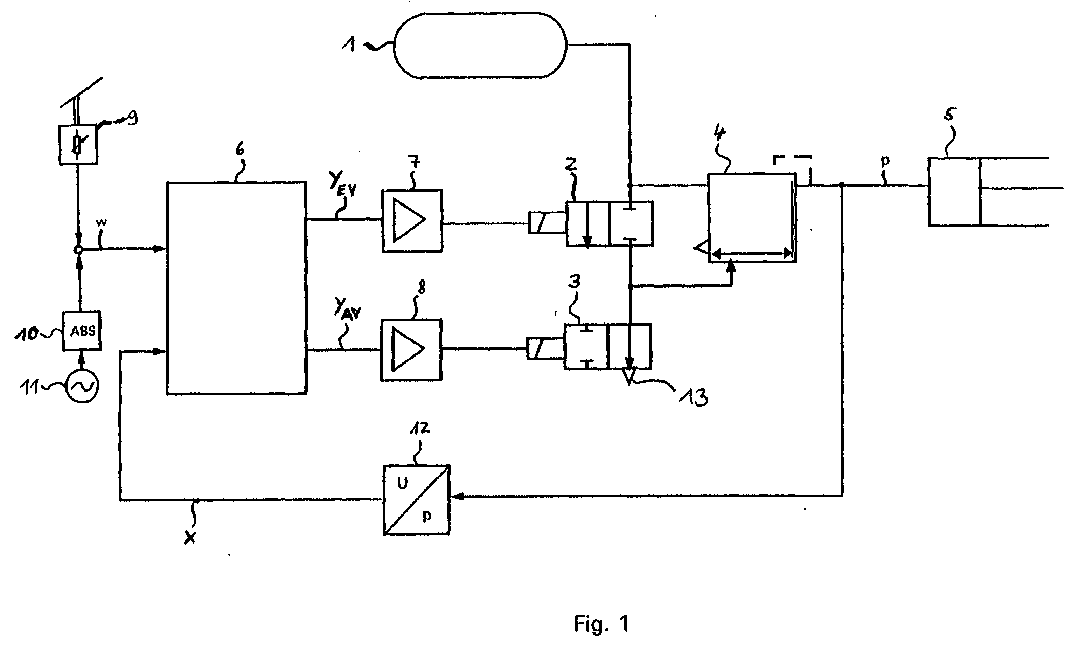

Die in der Fig. 1 dargestellte Bremsanlage weist einen Bremszylinder (5) auf, in dem ein Bremsdruck eingestellt werden soll, der möglichst schnell und genau einem Sollwertsignal (w) folgt. Der Bremszylinder (5) betätigt bei entsprechender Druckluftbeaufschlagung dann eine in der Fig. 1 nicht dargestellte Radbremse mechanisch.

Der Bremszylinder (5) ist über eine Druckluftleitung mit dem Ausgangsanschluß einer Relaisventileinrichtung (4) verbunden. Die Relaisventileinrichtung (4) weist neben dem Ausgangsanschluß noch einen Vorratsanschluß, welcher mit einem Druckluftvorratsbehälter (1) verbunden ist, und einen Steueranschluß auf, der mit zwei elektromagnetisch betätigbaren 2/2-Wegeventilen (2, 3) verbunden ist. Die 2/2-Wegeventile (2, 3) können je nach Beaufschlagung durch elektrische Betätigungssignale den Steuereingang der Relaisventileinrichtung (4) wahlweise mit dem Druckluftvorratsbehälter (1) oder mit einem in der Regel mit der umgebenden Atmosphäre verbundenen Druckluftauslaß verbinden oder eine derartige Verbindung unterbrechen. Hierbei dient das Ventil (2) als Einlaßventil und das Ventil (3) als Auslaßventil. Hiermit können somit drei sinnvolle Betätigungszustände eingestellt werden, nämlich Erhöhen, Halten und Absenken des Druckes an dem Steuereingang der Relaisventileinrichtung (4).

Bei dem Ventil (2) handelt es sich um ein stromlos geschlossenes Ventil, bei dem Ventil (3) handelt es sich um ein stromlos geöffnetes Ventil. Wegen der stromlos geöffneten Ausführung des Ventils (3) ist dieses Ventil im Normalfall immer einem Betätigungsstrom beaufschlagt und dadurch geschlossen. Ein Abschalten des Betätigungsstroms führt zu einem Öffnen des Ventils. Im folgenden wird daher bei dem Ventil (2) das Einschalten eines Betätigungsstroms als Ventilbetätigung-bezeichnet, und wird bei dem Ventil (3) das Ausschalten des Betätigungsstroms als Ventilbetätigung bezeichnet. Anders ausgedrückt, es wird immer das Umschalten von dem Zustand "Ventil geschlossen" in den Zustand "Ventil geöffnet" als Betätigung des jeweiligen Ventils bezeichnet.

Die Relaisventileinrichtung (4) dient zur Weitergabe des an dem Steuereingang anliegenden Drucks an ihren Druckluftausgang, wobei durch die Verwendung einer derartigen Relaisventileinrichtung die Druckluftdurchflußmenge im Vergleich zu den 2/2-Wegeventilen (2, 3) erheblich größer ist, so daß relativ kurze Befüllungsund Entleerungszeiten des Bremszylinders (5) ermöglicht werden.

Die 2/2-Wegeventile (2, 3) sind üblicherweise mit einem elektronischen Steuergerät verbunden, von dem in der stark vereinfachten Darstellung gemäß Fig. 1 ein digitaler Abtastregler (6), ein Antiblockiersystem ABS (10) sowie jeweils ein einem 2/2-Wegeventil (2, 3) zugeordneter Ausgangsverstärker (7, 8) dargestellt ist. Bei den Ausgangsverstärkern (7, 8) kann es sich beispielsweise um Schalttransistoren handeln. Das Antiblockiersystem (10), welches Geschwindigkeitssignale von einer Sensoreinrichtung (11) empfängt, ist üblicherweise in das elektronische Steuergerät integriert, z.B. als Elektronik- oder Programmodul.

Der digitale Abtastregler (6), dessen Aufbau im Folgenden noch näher beschrieben werden soll, empfängt das Sollwertsignal (w) sowie ein Istwertsignal (x) und berechnet hieraus Ausgangssignale ($y_{EV}$, $y_{AV}$), die den Ausgangsverstärkern (7, 8) zur Betätigung der 2/2-Wegeventile (2, 3) zugeführt werden.

Das Sollwertsignal (w) wird von einem Bremswertgeber (9) erzeugt und mit einem von dem Antiblockiersystem (10) erzeugten Korrektursignal derart korrigiert, daß ein Blockieren der Räder bei einer Bremsung verhindert wird. Der Bremswertgeber (9) ist mechanisch mit dem Bremspedal eines Fahrzeuges verbunden und gibt ein die Bremspedalbetätigung durch den Fahrer repräsentierendes Signal ab. Das Istwertsignal (x) wird von einem den Bremsdruck (p) in dem Bremszylinder (5) ermittelnden Drucksensor (12) erzeugt.

Weitere, in der Praxis üblicherweise verwendete Teile der Bremsanlage, wie z.B. ein pneumatischer Redundanzpfad, sind in der Fig. 1 zur Vereinfachung nicht dargestellt.

Die als Einlaß- und Auslaßventil verwendeten 2/2-Wegeventile (2, 3) weisen eine Ansprechtotzeit auf, die sich darin äußert, daß bei sehr kurzen Betätigungen kein Druckluftstrom fließt. Die Relaisventileinrichtung (4) enthält üblicherweise einen Relaiskolben mit einer Dichtung. Infolge von Reibungseffekten zwischen der Dichtung und Gehäuseteilen der Relaisventileinrichtung (4) weist die Relaisventileinrichtung eine Hysterese bei der Übertragung des am Steueranschluß vorliegenden Druckwertes an den Druckausgang auf. Hinzu kommt ebenfalls ein Totzeitverhalten der bei den 2/2-Wegeventilen bereits erwähnten Art. Aufgrund der zuvor erwähnten, für eine Druckregelung nicht-idealen Eigenschaften der Ventile (2, 3, 4) ist ein geeigneter, die nicht-idealen Eigenschaften kompensierender Aufbau des digitalen Abtastreglers (6) notwendig, wie er im folgenden näher erläutert wird.

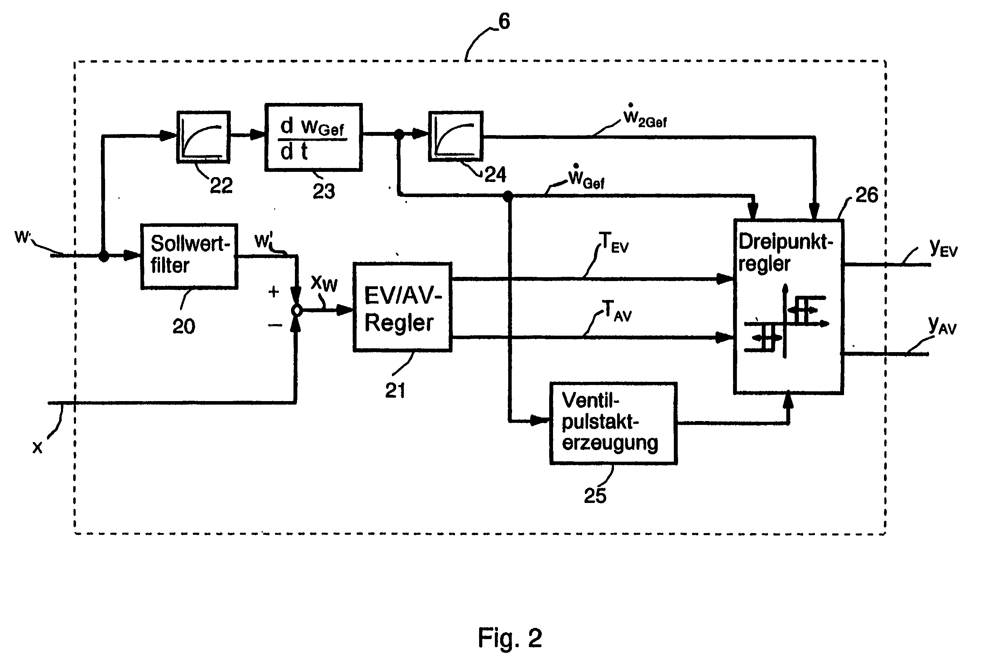

In der Fig. 2 ist der innere Aufbau des digitalen Abtastreglers (6) näher dargestellt. Das Sollwertsignal (w) wird zunächst einem als Sollwertfilter ausgebildeten Filterglied (20) zugeführt, welches ein modifiziertes Sollwertsignal (w') abgibt. Das Sollwertfilter (20) dient dazu, daß insbesondere bei sich sprunghaft änderndem Sollwertsignal (w) der digitale Abtastregler (6) derartige Ausgangssignale ($y_{EV}$, $y_{AV}$) erzeugt, denen die Ventileinrichtungen (2, 3, 4) folgen können. Außerdem wird eine in der Relaisventileinrichtung (4) auftretende Ansprechtotzone bei geringen Druckwerten bereits in dem Sollwertfilter (20) kompensiert, indem ein dieser Ansprechtotzone entsprechender Wertebereich des Sollwertsignals übersprungen wird. Hierbei wird in vorteilhafter Weise derjenige Wertebereich, der übersprungen wird, derart gewählt, daß hierbei eine konstruktionsbedingte Ansprechhysterese des Bremszylinders (5) nicht überschritten wird.

Aus dem Ausgangssignal (w') des Sollwertfilters (20) und dem Istwertsignal (x) wird sodann durch Differenzbildung eine Regelabweichung ($x_W$) gebildet, die einem EV/AV-Regler (21) zugeführt wird. Der EV/AV-Regler (21) dient zur Bestimmung geeigneter Zeitdauern, mit denen die 2/2-Wegeventile (2, 3) pulsförmig betätigt werden sollen, um hierüber einen gewünschten Bremsdruck in dem Bremszylinder (5) einzustellen. Jede der Zeitdauern ($T_{EV}$, $T_{AV}$) wird unter Verwendung eines Reglers mit einem Proportionalanteil und einem Integralanteil bestimmt, wobei der Proportionalitätsfaktor ($K_{PEV}$, $K_{PAV}$) und die Integrationskonstante ($K_{IEV}$, $K_{IAV}$) durch Versuche zu ermitteln sind. Der EV/AV-Regler (21) ist somit als PI-Regler ausgebildet. Hierbei werden für die Betätigungsdauer des Einlaßventils (2) und für die Betätigungsdauer des Auslaßventils (3) jeweils eigene Integralanteile fortlaufend aus der Regelabweichung ($x_W$) bestimmt, wobei der Integralanteil für das Einlaßventil (2) bei positiver Regelabweichung und der Integralanteil für das Auslaßventil bei negativer Regelabweichung ermittelt wird.

Neben dem Proportionalanteil und dem Integralanteil weisen die Betätigungsdauern ($T_{EV}$, $T_{AV}$) noch jeweils einen konstanten Anteil ($T_{ANEV}$, $T_{ANAV}$) auf, mittels dem durch die Bauart der 2/2-Wegeventile bedingte Ansprechtotzeiten kompensiert werden.

Der EV/AV-Regler (21) erzeugt außerdem bei einer gewünschten Druckerhöhung in dem Bremszylinder (5), die von dem Nullwert des Drucks ausgeht, eine Zusatzzeit ($T_O$), welche als weiterer Anteil der Betätigungsdauer ($T_{EV}$) für das Einlaßventil (2) additiv hinzugefügt wird. Hierdurch kann eine Ansprechtotzone der Relaisventileinrichtung (4) schnell überwunden werden.

Die Berechnung der Integralanteile erfolgt vorzugsweise durch numerische Integration mittels eines Mikroprozessors, d.h. durch Summation der einzelnen Werte der Regelabweichung ($x_W$).

Die Formeln für die Ermittlung der Betätigungsdauern ($T_{EV}$, $T_{AV}$) lauten somit:

$$T_{EV} = K_{PEV} \cdot x_W + K_{IEV} \cdot \Sigma x_W + T_{ANEV} + T_O \text{ bei einer Druckerhöhung vom Nullwert aus}$$

$$T_{EV} = K_{PEV} \cdot x_W + K_{IEV} \cdot \Sigma x_W + T_{ANEV} \text{ sonst}$$

$$T_{AV} = K_{PAV} \cdot x_W + K_{IAV} \cdot \Sigma x_W + T_{ANAV}$$

Die so ermittelten Betätigungsdauern ($T_{EV}$, $T_{AV}$) werden sodann einem Dreipunktregler (26) zugeführt.

Das Sollwertsignal (w) wird zusätzlich noch einem Filter (22) sowie einem nachgeschalteten Differentiationsglied (23) zugeführt und hierdurch zu einem gefilterten differenzierten Sollwertsignal ($\dot{w}_{Gef}$) umgewandelt. Dieses Signal ($\dot{w}_{Gef}$) wird einer Einrichtung (25) zur Erzeugung eines Ventilpulstakts und dem Dreipunktregler (26) zugeführt. Ein in einem Filter (24) durch zusätzliche Filterung des gefilterten differenzierten Sollwertsignals ($\dot{w}_{Gef}$) gewonnenes Signal ($\dot{w}_{2Gef}$) wird zusätzlich dem Dreipunktregler (26) zugeführt.

Da bei alleiniger Verwendung des Dreipunktreglers zur Erzeugung der Ansteuerimpulse für die 2/2-Wegeventile (2, 3) die Ausgabe dieser Ansteuerimpulse zu beliebigen Zeitpunkten erfolgen könnte, d.h. ohne Berücksichtigung von minimal oder maximal zulässigen Ansteuerfrequenzen, ist dem Dreipunktregler (26) die Einrichtung (25) zur Erzeugung eines Ventilpulstakts, im folgenden auch als Ventilpulstakterzeugung bezeichnet, vorgeschaltet. Die Ventilpulstakterzeugung (25) bewirkt, daß die Ansteuerfrequenz, also der Kehrwert des zeitlichen Abstandes aufeinanderfolgender Ansteuerimpulse, auf einen für die eingesetzten 2/2-Wegeventile (2, 3) optimalen Maximalwert, der vorzugsweise kleiner als die Eigenfrequenz der Ventile ist, begrenzt wird. In einer bevorzugten Ausführungsform der Erfindung wird die Zeit seit dem Beginn des zuletzt ausgegebenen Ansteuerimpulses gemessen und erst nach Ablauf einer Mindestwartezeit ein Freigabesignal für die Ausgabe des nächsten Ansteuerimpulses an den Dreipunktregler (26) abgegeben. Bevorzugte Ansteuerfrequenzen liegen im Bereich von 10 bis 20 Hertz.

Die Mindestwartezeit wird vorzugsweise in Abhängigkeit von dem Kehrwert des Betrags des gefilterten differenzierten Sollwertsignals ($\dot{w}_{Gef}$) festgelegt. Dies kann bei Vermeidung eines hohen Rechenaufwandes z.B. dadurch erfolgen, daß der Wertebereich des gefilterten differenzierten Sollwertsignals ($\dot{w}_{Gef}$) in drei Bereiche eingeteilt wird und jedem dieser Bereiche eine vordefinierte, auf den jeweiligen Bereich optimierte Mindestwartezeit zugeordnet wird. Die vordefinierten Werte der Mindestwartezeit werden dabei unter Berücksichtigung der zuvor erwähnten Bestimmungsregel festgelegt.

Der Dreipunktregler (26) erzeugt in Abhängigkeit seiner Eingangssignale Betätigungssignale ($y_{EV}$, $y_{AV}$) für die 2/2-Wegeventile (2, 3). Hierbei sind die bei einem Dreipunktregler systembedingt vorhandenen Totzonen, d.h. diejenigen positiven und negativen Wertebereiche des Eingangssignals, innerhalb deren keine Ventilansteuerung erfolgt, in Abhängigkeit vom zeitlichen Solldruckgradienten veränderbar.

In dem Dreipunktregler (26) werden folgende Zustände bezüglich des gefilterten differenzierten Sollwertsignals ($\dot{w}_{Gef}$), das mit dem Solldruckgradienten vergleichbar ist, unterschieden:

1. Druckhaltephase: $\dot{w}_{Gef} \approx 0$
2. Druckaufbauphase: $\dot{w}_{Gef} > 0$
3. Druckabbauphase: $\dot{w}_{Gef} < 0$

Des weiteren werden, wie bei einem Dreipunktregler üblich, drei verschiedene Ausgangszustände bzw. Ausgangssignale unterschieden, nämlich:

- Betätigung des Einlaßventils (2),
- Betätigung des Auslaßventils (3),
- keine Ventilbetätigung.

Eine Betätigung des Einlaßventils (2) erfolgt üblicherweise in der Druckaufbauphase, mit anderen Worten also dann, wenn die als Eingangsgröße für den Dreipunktregler verwendete, aus der Regelabweichung ($x_W$) abgeleitete Regelgröße einen Schwellenwert überschreitet, d.h. eine Reglertotzone in Richtung positiver Werte verläßt. Der Schwellenwert stellt somit die Grenze einer Reglertotzone dar.

Bei der vorliegenden Erfindung erfolgt eine Betätigung des Einlaßventils (2) unter bestimmten Voraussetzungen jedoch auch in der Druckhaltephase oder sogar in der Druckabbauphase. Hierbei wird einerseits der Schwellenwert, mit dem die aus der Regelabweichung ($x_W$) abgeleitete Regelgröße verglichen wird, variiert, und andererseits eine zusätzliche Bedingung abgefragt, die Auskunft darüber gibt, ob sich das Sollwertsignal (w) kurz zuvor sprunghaft geändert hat.

In Analogie hierzu wird das Auslaßventil in erster Linie, wie bei einem Dreipunktregler allgemein üblich, in der Druckabbauphase betätigt, wenn die aus der Regelabweichung ($x_W$) abgeleitete Regelgröße einen anderen Schwellenwert in Richtung negativer Werte unterschreitet. Das Auslaßventil (3) kann aber ebenfalls bei Vorliegen bestimmter Voraussetzungen auch in der Druckhaltephase oder sogar in der Druckaufbauphase betätigt werden. Zusätzliche Voraussetzungen hierfür sind wiederum ein entsprechend angepaßter Schwellenwert sowie eine Information über in der Vergangenheit aufgetretene sprunghafte Änderungen des Sollwertsignals (w).

Bei der Auswertung sprunghafter Änderungen des Sollwertsignals (w) wird für das Einlaßventil (2) die Zeit betrachtet, die seit der letzten sprunghaften Verringerung des Sollwertsignals (w) vergangen ist, während für das Auslaßventil (3) die Zeit seit dem letzten sprunghaften Anstieg des Sollwertsignals (w) betrachtet wird.

Das Betätigen des Auslaßventils (3) in der Druckaufbauphase bzw. des Einlaßventils (2) in der Druckabbauphase bezeichnet man auch als Gegenregeln. Das Gegenregeln dient der Verringerung von Überschwingtendenzen bei sich schnell änderndem Druck. Da das Gegenregeln eine Druckänderung entgegengesetzt zu der durch das Sollwertsignal (w) vorgegebenen Änderung bewirkt, also eine in der Regel geringfügige Druckverringerung in der Druckaufbauphase und eine in der Regel geringfügige Druckerhöhung in der Druckabbauphase, wird im folgenden noch unterschieden zwischen dem eigentlichen Druckaufbau und dem Gegenregeln in der Druckaufbauphase bzw. dem eigentlichen Druckabbau und dem Gegenregeln in der Druckabbauphase.

Im folgenden werden die Bedingungen für die Betätigung des Einlaßventils (2) und des Auslaßventils (3) im einzelnen dargelegt, wobei folgende zusätzliche Größen verwendet werden:

| | |
|---|---|
| $t_{SAV}$ | Zeitzähler zur Bestimmung der Zeit seit der letzten sprunghaften Verringerung des Sollwertsignals (w), |
| $t_{SEV}$ | Zeitzähler zur Bestimmung der Zeit seit der letzten sprunghaften Erhöhung des Sollwertsignals (w), |
| $t_s$ | Schwellenwert für Zeitzähler, |
| $x_{W1EVA}$ | Basisschwellenwert für eine Betätigung des Einlaßventils (2) in der Druckhaltephase kurz ($t_{SAV} < t_s$) nach einer sprunghaften Verringerung des Sollwertsignals (w), |
| $x_{W1EVB}$ | Basisschwellenwert für eine Betätigung des Einlaßventils (2) in der Druckhaltephase längere Zeit ($t_{SAV} \geq t_s$) nach einer sprunghaften Verringerung des Sollwertsignals (w), |
| $x_{W1AVA}$ | Basisschwellenwert für eine Betätigung des Auslaßventils (3) in der Druckhaltephase kurz nach einer sprunghaften Erhöhung des Sollwertsignals (w), |
| $x_{W1AVB}$ | Basisschwellenwert für eine Betätigung des Auslaßventils (3) in der Druckhaltephase längere Zeit nach einer sprunghaften Erhöhung des Sollwertsignals (w), |
| $x_{W2EV}$ | Basisschwellenwert für eine Betätigung des Einlaßventils (2) in der Druckaufbauphase, |
| $x_{W2AV}$ | Basisschwellenwert für eine Betätigung des Auslaßventils (3) beim Gegenregeln in der Druckaufbauphase, |
| $x_{W3EV}$ | Basisschwellenwert für eine Betätigung des Einlaßventils (2) beim Gegenregeln in der Druckabbauphase, |
| $x_{W3AV}$ | Basisschwellenwert für eine Betätigung des Auslaßventils (3) in der Druckabbauphase. |

Die Betätigung des Einlaßventils (2) erfolgt dann beim Vorliegen einer oder mehrerer der folgenden Bedingungen:

I Druck halten:

Wenn $\dot{w}_{Gef} \approx 0$ und

wenn $t_{SAV} < t_S$ und $x_W > x_{W1EVA} - k_1 \cdot \dot{w}_{2Gef}$

oder $t_{SAV} \geq t_S$ und $x_W > x_{W1EVB}$

II Druckaufbau in der Druckaufbauphase:

Wenn $\dot{w}_{Gef} > 0$ und
wenn $x_W > x_{W2EV} - k_2 \cdot \dot{w}_{Gef}$

III Gegenregeln in der Druckabbauphase:

Wenn $\dot{w}_{Gef} < 0$ und

$$\text{wenn} \qquad x_W > x_{W3EV} - k_3 \cdot \dot{w}_{2Gef}$$

Die Betätigung des Auslaßventils (3) erfolgt dagegen beim Vorliegen einer oder mehrerer der folgenden Bedingungen:

IV Druck halten:

Wenn $\qquad \dot{w}_{Gef} \approx 0$ und
wenn $\qquad t_{SEV} < t_S$ und $x_W < x_{W1AVA} - k_1 \cdot \dot{w}_{2Gef}$
oder $t_{SEV} \geq t_S$ und $x_W < x_{W1AVB}$

V Druckabbau in der Druckabbauphase:

Wenn $\qquad \dot{w}_{Gef} < 0$ und
wenn $\qquad x_W < x_{W2AV} - k_2 \cdot \dot{w}_{Gef}$

VI Gegenregeln in der Druckaufbauphase:

Wenn $\qquad \dot{w}_{Gef} > 0$ und
wenn $\qquad x_W < x_{W3AV} - k_3 \cdot \dot{w}_{2Gef}$

Durch die Faktoren ($k_1$, $k_2$, $k_3$) ist eine an den jeweiligen Betriebszustand des Reglers angepaßte Verschiebung der wirksamen Schwellenwerte bzw. eine Veränderung der Totzone in Abhängigkeit von den durch Differentiation und Filterung bestimmten Signalen ($\dot{w}_{Gef}$, $\dot{w}_{2Gef}$) des Sollwertsignals (w) möglich. Durch geeignete Dimensionierung des Faktors ($k_1$) kann ein unerwünschtes Gegenregeln in Abhängigkeit von der Größe einer sprunghaften Änderung des Sollwertsignals (w) verhindert werden.

Durch geeignete Anpassung des Faktors ($k_2$) kann der mittlere Regelungsfehler, der sich z.B. aus Einschwingvorgängen ergibt, verringert werden, da die durch diesen Faktor ($k_2$) beeinflußte Totzone des Reglers derart verschoben wird, daß eine Betätigung des jeweiligen Ventils auch bei kleineren Regelabweichungen möglich wird und somit eine Regelung gemäß der zuvor beschriebenen PI-Charakteristik eingeleitet wird. Zusätzlich kann bei relativ kleinen sprunghaften Änderungen des Sollwertsignals (w), die beispielsweise einer Bremsdruckänderung von 0,25 bar entsprechen, ein schnelleres und zusätzlich längeres Ansprechen des Reglers erreicht werden. Hierdurch kann die Regelung sehr schnell und empfindlich auch auf kleine Änderungen des Sollwertsignals (w) reagieren.

Mittels einer geeigneten Wahl des Faktors ($k_3$) kann ein unerwünschtes Gegenregeln, insbesondere bei schnellen Änderungen des Sollwertsignals (w) vermieden werden. Hierdurch kann ein Hin- und Herpendeln des Reglers zwischen den Zuständen Bremsdruckaufbau und Bremsdruckabbau zuverlässig verhindert werden.

Im folgenden wird die Funktionsweise des Sollwertfilters (20) und der Ventilpulstakterzeugung (25) nach Art von Verfahrensschritten anhand von Flußdiagrammen näher erläutert. Das Sollwertfilter (20) und die Ventilpulstakterzeugung (25) könnten somit als Teile eines Steuerprogramms für einen Mikroprozessor praktisch realisiert werden. Es wäre auch möglich, sie durch entsprechende elektronische Schaltungsanordnungen praktisch zu realisieren.

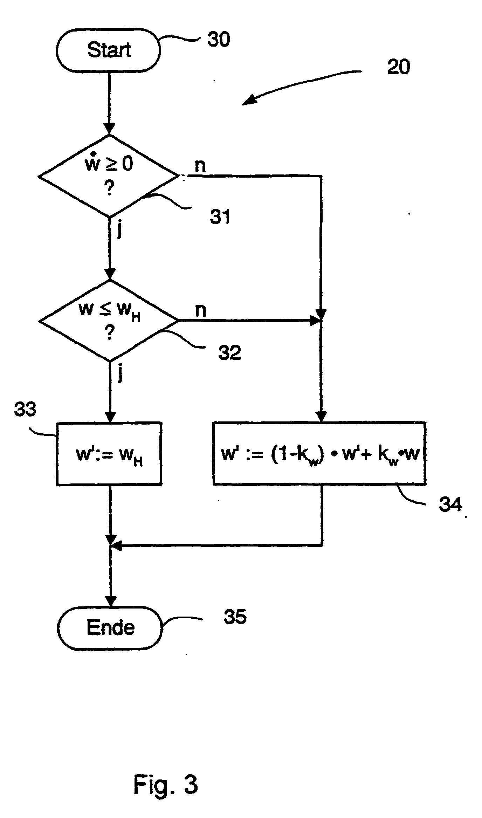

Das Sollwertfilter (20) in der verfahrensmäßigen Darstellung gemäß Fig. 3 beginnt mit einem Block (30). In einem nachfolgenden Verzweigungsblock (31) wird zunächst überprüft, ob die zeitliche Ableitung ($\dot{w}$) des Sollwertsignals (w) positive Werte aufweist, d. h. es wird geprüft, ob das Sollwertsignal (w) zeitlich ansteigt. Wenn dies nicht der Fall ist, so wird zu einem im folgenden noch näher erläuterten Zuweisungsblock (34) verzweigt. Anderenfalls wird von dem Verzweigungsblock (31) zu dem Verzweigungsblock (32) verzweigt.

In dem Verzweigungsblock (32) wird überprüft, ob das Sollwertsignal (w) Werte aufweist, die zu Druckwerten in der Relaisventileinrichtung (4) führen würden, die innerhalb der Ansprechtotzone dieser Relaisventileinrichtung liegen. Dies ist bei Werten des Sollwertsignals (w) unterhalb eines durch Versuche zu ermittelnden Ansprechwertes ($w_H$) zu erwarten. Daher wird bei Vorliegen von Werten des Sollwertsignals (w) unterhalb des Ansprechwertes ($w_H$) zu dem Zuweisungsblock (33) verzweigt, in welchem das modifizierte Sollwertsignal (w') auf den Ansprechwert ($w_H$) gesetzt wird.

Falls die Überprüfung in dem Verzweigungsblock (32) negativ ausfällt, so wird zu dem Zuweisungsblock (34) verzweigt. In dem Zuweisungsblock (34) wird mittels numerischer Tiefpaßfilterung erster Ordnung ein neuer Wert für das modifizierte Sollwertsignal (w') aus einem alten, zuvor berechneten Wert des modifizierten Sollwertsignals (w') und aus dem Sollwertsignal selbst nach folgender Formel berechnet:

$$w' := (1 - k_W) \cdot w' + k_W \cdot w$$

EP 1 028 043 B1

Die Größe ($k_W$) stellt eine Filterkonstante dar. Ein bevorzugter Wert ist $k_W$ = 0.25. Daraufhin endet der Verfahrensabschnitt mit einem Block (35).

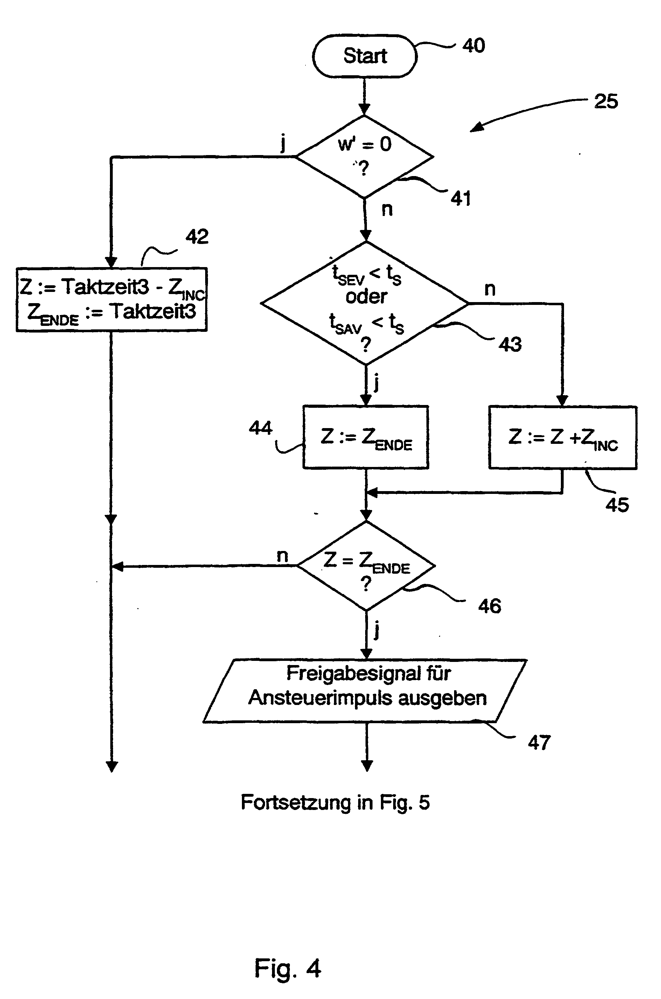

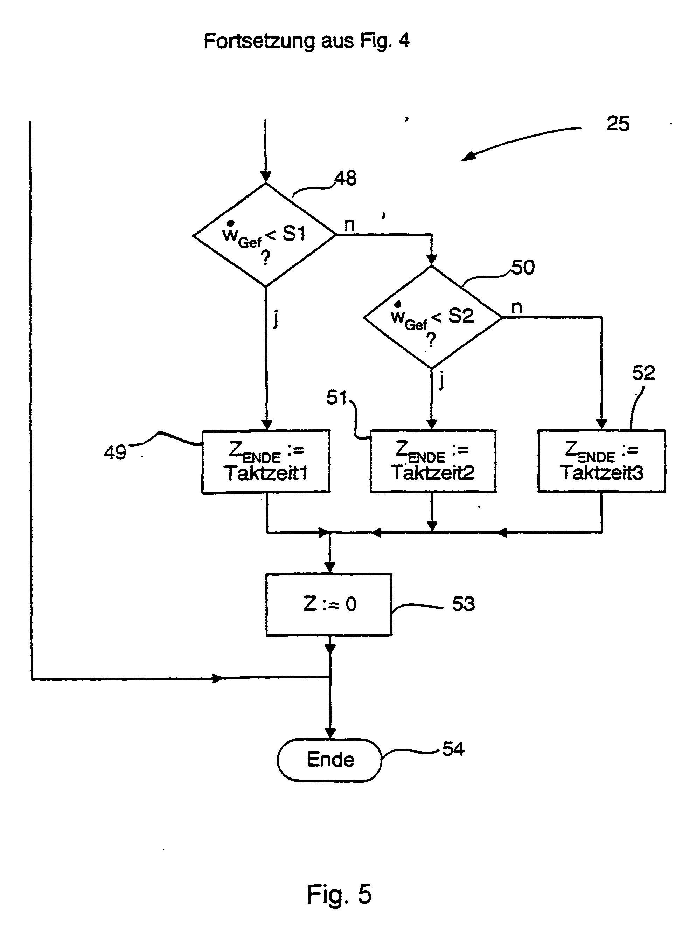

In den Fig. 4 und 5 ist die Ventilpulstakterzeugung (25) als weiterer Verfahrensabschnitt in Form eines in zwei Abschnitte unterteilten Flußdiagramms dargestellt. Der Verfahrensabschnitt beginnt in der Fig. 4 mit einem Block (40).

Die in diesem Verfahrensabschnitt verwendeten Variablen (Z, $Z_{ENDE}$) dienen als Zähler (Z) und als höchstzulässiger Endwert ($Z_{ENDE}$) für den Zähler (Z). Der Endwert ($Z_{ENDE}$) stellt damit die Mindestwartezeit dar, nach der auf einen Ansteuerimpuls frühestens ein darauffolgender Ansteuerimpuls an die Ventileinrichtungen (2, 3) ausgegeben werden kann. Der Endwert ($Z_{ENDE}$) kann dabei in Abhängigkeit von dem gefilterten differenzierten Sollwertsignal ($\dot{w}_{Gef}$) auf verschiedene Werte (Taktzeitl, Taktzeit2, Taktzeit3) gesetzt werden.

In einem darauffolgenden Verzweigungsblock (41) wird zunächst überprüft, ob eine Bremsbetätigung vorliegt (w' # 0) oder nicht (w' = 0). Wenn keine Bremsbetätigung vorliegt, so wird zu einem Zuweisungsblock (42) verzweigt, indem der Zähler (Z) und der Endwert ($Z_{ENDE}$) auf für den Beginn einer Abbremsung sinnvolle Anfangswerte (Z: =Taktzeit3-$Z_{INC}$, $Z_{ENDE}$:=Taktzeit3) gesetzt werden. Die Größe ($Z_{INC}$) ist ein weiter unter erläuterter Inkrement-Wert. Die Anfangswerte sind dabei so gewählt, daß zu Beginn einer Bremsbetätigung sofort ein Freigabesignal zur Erzeugung eines Ansteuerimpulses für die Ventileinrichtung (2, 3) erzeugt werden kann. Sodann wird dieser Verfahrensabschnitt mit dem Block (54) in Fig. 5 beendet.

Wenn eine Bremsbetätigung vorliegt (w' ≠ 0), dann wird gemäß Fig. 4 zu einem Verzweigungsblock (43) verzweigt. In dem Verzweigungsblock (43) wird überprüft, ob in einem vergangenen Zeitraum eine sprunghafte Verringerung oder Erhöhung des Sollwertsignals aufgetreten ist. Hierfür werden die bereits erwähnten Zeitzähler ($t_{SAV}$, $t_{SEV}$) verwendet, die daraufhin überprüft werden, ob ihr Wert kleiner als der ebenfalls bereits erwähnte Schwellenwert ($t_S$) ist. Wenn dies der Fall ist, d. h. wenn kurz zuvor eine sprunghafte Veränderung des Sollwertsignals (w) aufgetreten ist, dann wird zu dem Zuweisungsblock (44) verzweigt, in welchem der Zähler (Z) auf den Endwert ($Z_{ENDE}$) gesetzt wird. Anderenfalls wird in einem Zuweisungsblock (45) der Zähler (Z) um einen Inkrement-Wert ($Z_{INC}$) erhöht. Der Inkrement-Wert ($Z_{INC}$) kann beispielsweise eine Zeiteinheit von einer Millisekunde sein.

Sodann wird mit einem Verzweigungsblock (46) fortgefahren, in dem überprüft wird, ob der Zähler (Z) den Endwert ($Z_{ENDE}$) erreicht hat. Wenn dies nicht der Fall ist, so wird zu dem bereits erwähnten Block (54) verzweigt, mit dem der Verfahrensabschnitt endet. Anderenfalls ist das Ende einer Mindestwartezeit für die Ausgabe eines neuen Ansteuerimpulses abgelaufen, so daß in einem folgenden Datentransferblock (47) ein Freigabesignal für die Ausgabe eines Ansteuerimpulses an den Dreipunktregler (26) ausgegeben wird.

Hiernach wird gemäß Fig. 5 in den Blöcken (48, 49, 50, 51, 52) in Abhängigkeit von dem gefilterten differenzierten Sollwertsignal ($\dot{w}_{Gef}$) ein neuer Endwert ($Z_{ENDE}$) festgelegt. Hierbei wird in einem Verzweigungsblock (48) zunächst überprüft, ob das gefilterte differenzierte Sollwertsignal ($\dot{w}_{Gef}$) kleiner ist als ein erster Schwellenwert (S1). Wenn dies der Fall ist, so wird der Endwert ($Z_{ENDE}$) in einem Zuweisungsblock (49) auf eine erste Mindestwartezeit (Taktzeit1) gesetzt. Anderenfalls wird das gefilterte differenzierte Sollwertsignal ($\dot{w}_{Gef}$) mit einem zweiten Schwellenwert (S2), der größer ist als der erste Schwellenwert (S1), verglichen. Bei Unterschreitung des zweiten Schwellenwertes (S2) wird der Endwert ($Z_{ENDE}$) in einem Zuweisungsblock (51) auf eine zweite Mindestwartezeit (Taktzeit2) gesetzt. Anderenfalls wird in einem Zuweisungsblock (52) der Endwert ($Z_{ENDE}$) auf eine dritte Mindestwartezeit (Taktzeit3) gesetzt.

In vorteilhafter Weise sind die Mindestwartezeiten (Taktzeit1, Taktzeit2, Taktzeit3) so gewählt, daß eine umgekehrte Proportionalität zu den Werten des gefilterten differenzierten Sollwertsignals ($\dot{w}_{Gef}$) bzw. den Schwellenwerten (S1, S2) vorliegt. Dies bedeutet, daß die erste Mindestwartezeit (Taktzeit1) größer ist als die anderen Mindestwartezeiten (Taktzeit2, Taktzeit3) und die zweite Mindestwartezeit (Taktzeit2) größer ist als die dritte Mindestwartezeit (Taktzeit3).

Schließlich wird in einem Zuweisungsblock (53) der Zähler (Z) auf einen Anfangswert (0) zurückgesetzt. Daraufhin endet der Verfahrensabschnitt mit dem Block (54).

## Patentansprüche

1. Druckregeleinrichtung, insbesondere elektrisch betätigbare Bremseinrichtung für ein Fahrzeug, mit einer Ventileinrichtung (2, 3) zum Erhöhen, Absenken oder Halten eines Drucks (p) in einem Verbraucher (5), die ein als Einlaßventil (2) wirkendes 2/2-Wegeventil und ein als Auslaßventil (3) wirkendes, stromlos offenes 2/2-Wegeventil aufweist, wobei zwischen der Ventileinrichtung (2, 3) und dem Verbraucher (5) eine Relaisventileinrichtung (4) angeordnet ist, **dadurch gekennzeichnet, dass** die Ventileinrichtung (2, 3) zum Minimieren einer Regelabweichung ($x_W$), die zwischen einem aus dem Druck (p) abgeleiteten Istwertsignal (x) und einem Sollwertsignal (w) auftreten kann, mit Betätigungssignalen beaufschlagbar ist, wobei zur Erzeugung der Betätigungssignale für die Ventileinrichtung (2, 3) ein digitaler Abtastregler (6) vorgesehen ist, der eine Reihenschaltung aus einem Filterglied (20), einem PI-Regler (21) und einem Dreipunktregler (26) enthält.

7

2. Druckregeleinrichtung nach einem der vorhergehenden Ansprüche, **dadurch gekennzeichnet, dass** die Ventileinrichtung (2, 3) mit einem zeitmodulierten Digitalsignal beaufschlagbar ist, dessen Schaltfrequenz unterhalb der Eigenfrequenz der Ventileinrichtung (2, 3) liegt.

3. Druckregeleinrichtung nach einem der vorhergehenden Ansprüche, **dadurch gekennzeichnet, dass** das Sollwertsignal (w) von dem Ausgangssignal eines Bremswertgebers (9) abgeleitet wird, welcher ein die Betätigung eines Bremspedals repräsentierendes elektrisches Signal abgibt.

4. Druckregeleinrichtung nach einem der vorhergehenden Ansprüche, **dadurch gekennzeichnet, dass** der digitale Abtastregter (6) eine dem Dreipunktregter (26) vorgeschaltete Einrichtung (25) zur Erzeugung eines Ventilpulstakts enthält.

5. Druckregeleinrichtung nach einem der vorhergehenden Ansprüche, **dadurch gekennzeichnet, dass** der digitale Abtastregler (6) eine Reihenschaltung aus einem Tiefpaß (22), einem Differentiationsglied (23) und einem weiteren Tiefpaß (24) enthält.

6. Druckregeleinrichtung nach einem der vorhergehenden Ansprüche, **dadurch gekennzeichnet, dass** der Dreipunktregler (26) variable Totzonen aufweist, die in Abhängigkeit von in der Vergangenheit aufgetretenen sprunghaften Änderungen des Sollwertsignals (w) veränderbar sind.

**Claims**

1. Pressure control device, especially an electrically actuatable braking device for a vehicle, having a valve device (2, 3) for increasing, reducing or maintaining a pressure (p) in a load (5), comprising a 2/2-way valve acting as inlet valve (2) and a 2/2-way valve, which is open when unenergised, acting as outlet valve (3), a relay valve device (4) being arranged between the valve device (2, 3) and the load (5), **characterised in that**, for minimising a control error ($x_w$) which can occur between an actual value signal (x) derived from the pressure (p) and a desired value signal (w), the valve device (2, 3) is arranged to be acted upon by actuation signals, there being provided for generating the actuation signals for the valve device (2, 3) a digital sampling controller (6) comprising a series connection of a filter element (20), a PI controller (21) and a three-position controller (26).

2. Pressure control device according to one of the preceding claims, **characterised in that** the valve device (2, 3) is arranged to be acted upon by a time-modulated digital signal the switching frequency of which is below the natural frequency of the valve device (2, 3).

3. Pressure control device according to one of the preceding claims, **characterised in that** the desired value signal (w) is derived from the output signal of a braking value generator (9) which emits an electrical signal representing the actuation of a brake pedal.

4. Pressure control device according to one of the preceding claims, **characterised in that** the digital sampling controller (6) comprises a device (25) for generating valve clocking pulses, connected upstream of the three-position controller (26).

5. Pressure control device according to one of the preceding claims, **characterised in that** the digital sampling controller (6) comprises a series connection of a low pass (22), a differentiation element (23) and a further low pass (24).

6. Pressure control device according to one of the preceding claims, **characterised in that** the three-position controller (26) has variable dead zones which are arranged to be modified in dependence upon abrupt changes in the desired value signal (w) that have occurred in the past.

**Revendications**

1. Dispositif de commande de pression hydraulique, en particulier un dispositif de freinage commandé électriquement pour un véhicule, muni d'un dispositif de soupape (2, 3) en vue de l'augmentation, de la chute ou du maintien d'une pression (p) dans un dissipateur (5), qui présente un distributeur à 2/2 orifices agissant en tant qu'électrovalve d'entrée et un distributeur à 2/2 orifices ouvert non conducteur agissant en tant qu'électrovalve de sortie, dans lequel entre le dispositif de soupape (2, 3) et le dissipateur (5) est disposé un dispositif de soupape à relais (4), **caractérisé en ce que** le dispositif de soupape (2, 3) peut être alimenté par des signaux de commande en vue de minimiser un déréglage ($x_w$), qui peut apparaître entre un signal de valeur réelle (x) dérivé de la pression (p) et un signal de valeur prescrite (w), dans lequel, en vue de la génération de signaux de commande pour le dispositif de soupape (2, 3) est prévu un régulateur d'échantillonnage numérique (6), qui contient un montage série constitué d'un élément de filtre (20), d'un régulateur-PI (21) et d'un régulateur à trois points (26).

2. Dispositif de commande par pression selon la revendication précédente, **caractérisé en ce que** le dispositif de soupape (2, 3) peut être alimenté par un signal numérique modulé dans le temps, dont la fréquence de commutation se situe sous la fréquence de résonance du dispositif de soupape (2, 3).

3. Dispositif de commande par pression selon l'une des revendications précédentes, **caractérisé en ce que** le signal de valeur prescrite (w) est dérivé du signal de sortie d'un transmetteur de valeur de freinage (9), lequel délivre un signal électrique représentant la commande d'une pédale de frein.

4. Dispositif de commande par pression selon l'une des revendications précédentes, **caractérisé en ce que** le régulateur d'échantillonnage numérique (6) comporte un dispositif (25) placé en amont d'un régulateur à trois points (26) en vue de la génération d'une cadence d'impulsion de soupape.

5. Dispositif de commande par pression selon l'une des revendications précédentes, **caractérisé en ce que** le régulateur d'échantillonnage numérique 6 comporte un montage série à partir d'un passe-bas (22), d'un élément de différentiation (23) et d'un autre passe-bas (24).

6. Dispositif de commande par pression selon l'une des revendications précédentes, **caractérisé en ce que** le régulateur à trois points (26) présente des zones mortes variables, qui sont modifiables selon les changements brusques apparaissant dans le passé du signal de valeur prescrite (w).

Fig. 1

Fig. 2

EP 1 028 043 B1

Start — 30

20

$\dot{w} \geq 0$ ? — 31

n

j

$w \leq w_H$ ? — 32

n

j

33

$w' := w_H$

$w' := (1-k_w) \cdot w' + k_w \cdot w$ — 34

Ende — 35

Fig. 3

Start — 40

25

w' = 0 ? — 41

j → Z := Taktzeit3 - $Z_{INC}$
$Z_{ENDE}$ := Taktzeit3 — 42

n

$t_{SEV} < t_S$ oder $t_{SAV} < t_S$ ? — 43

n → Z := Z + $Z_{INC}$ — 45

j

44 — Z := $Z_{ENDE}$

Z = $Z_{ENDE}$ ? — 46

n

j

Freigabesignal für Ansteuerimpuls ausgeben — 47

Fortsetzung in Fig. 5

Fig. 4

Fortsetzung aus Fig. 4

25

48

$\overset{\bullet}{w}_{Gef} < S1$ ?

n

j

50

$\overset{\bullet}{w}_{Gef} < S2$ ?

n

j

49

51

52

$Z_{ENDE} :=$ Taktzeit1

$Z_{ENDE} :=$ Taktzeit2

$Z_{ENDE} :=$ Taktzeit3

$Z := 0$

53

Ende

54

Fig. 5